## Europäisches Patentamt
## European Patent Office
## Office européen des brevets

(11) Publication number: **0 198 556**
A1

(12) # EUROPEAN PATENT APPLICATION

(21) Application number: 86200622.8

(22) Date of filing: 11.04.86

(51) Int. Cl.⁴: **B 64 C 1/14**, B 32 B 17/10, B 32 B 27/30

(30) Priority: 18.04.85 NL 8501127

(43) Date of publication of application: 22.10.86
Bulletin 86/43

(84) Designated Contracting States: **AT BE CH DE FR GB IT LI LU NL SE**

(71) Applicant: **Kunststofverwerkende Industrie Katan B.V., Weerdskampweg 15 P.O. Box 2042, NL-5202 CA 's-Hertogenbosch (NL)**

(72) Inventor: **van Vliet, Arie H. F., Duinkerkenlaan 48, NL-5627 ME Eindhoven (NL)**
Inventor: **Kipperman, Antoon H. M., Egelantierlaan 35, NI-5672 XJ Nuenen (NL)**

(74) Representative: **Noz, Franciscus Xaverius, Ir. et al, Boschdijk 155 P.O. Box 645, NL-5600 AP Eindhoven (NL)**

(54) **Window for aircraft cabin.**

(57)  Aircraft cabin window consisting mainly of polymethylmethacrylate (PMMA) and provided with a coating, whereby at least one surface of the window is covered with an optically transparant layer or coating consisting mainly of polyvinylidene fluoride (PVDF).

EP 0 198 556 A1

-1-

Window for aircraft cabin.


The invention concerns an aircraft cabin window mainly of polymethylmethacrylate (PMMA) provided with a coating. The invention further concerns aircrafts provided with such cabin windows.

Aircrafts are usually supplied with cabin windows consisting of polymethylmethacrylate (PMMA). This material is stretched biaxially at an elevated temperature, which increases the strength of the material. After stretching, the windows are thermoformed to follow the shape of the outside of the aircraft. Flying at high altitudes, there is a pressure difference between the inside and outside of the aircraft. The pressure difference causes a tensile stress in the outer layer of the window, which results in a decreased resistance against chemical and physical influences as compared to material without any tensile stress in the surface layer.

In recent years a strong decrease in the mean time between replacement of the windows has been observed because of the appearance of small crazes in the outer surface layer of the windows, which severly impair the transparancy. In a report by K. Ewald, presented at the ASTM F 7.08 meeting in Los Angeles, 9-10 Nov. 1983: "Airline experience with crazing", it is stated that these crazes could be related to the influence of sulfuric acid. This appears in the stratosphere most likely because of several major vulcano-eruptions in recent years. Laboratory experiments have shown that indeed strong crazing can be observed within half an hour after exposing the surface layer of a cabin window under a tensile stress of 20 MPa to a 40% sulfuric acid solution. Therefore, assuming that sulfuric acid is a representative of the main causes of the recent increase in crazing, it is now possible to check methods of improving the resistance against stress corrosion.

In the European patent application No. 0 055 802, a method is described to prevent the occurence of cracks in the peripheral edge surface of windows. This cracking in fact is a delamination between the different layers of the biaxially oriented PMMA, which can be caused by a humidity gradient in the edge surface. The method consists of coating the edge with a thin layer of a polymer material such as: poly(vinylidene chloride), poly(tetrafluoroethylene), chlorinated polyether, poly(vinylidene fluoride), polyethylene, poly(vinyl chloride), butyl rubber, poly(ethylene terephthalate), neoprene and nitrile elastomers. According to this application only the peripheral edge is coated with such a layer, because that is the place where cracking originates. The polymers have been chosen such that the moisture permeation rate of the coating is substantially lower than that of the window material.

It has been found now that the formation of crazes due to chemical and physical influences of the environment on the outer surface of aircraft cabin windows under tensile stress can be prevented or at least substantially reduced by covering the outer surface with a layer of polymer material, characterized in that the layer mainly consists of polyvinylidene fluoride (PVDF). The thickness of this layer is preferably between 2 and 100 μm, especially between 20 and 50 μm.

It is known from the U.S. patent 4,226,904 (corresponding with French patent application 2,397,927) that objects made of PMMA can be covered with PVDF. However no mention is made of application of this material for aircraft cabin windows.

For reasons of increased resistance against chemical and physical influences in combination with good optical transparancy, it could be advisable to use an interlayer between the PVDF coating and the PMMA window consisting of a blend of PVDF and PMMA. Another possibility is to use a coating with a gradient in the concentration ratio of PVDF and PMMA.

It will be clear that a greater resistance can be expected for a larger concentration of PVDF. Application of the coating according to the invention can be done by various methods like co-extrusion, immersion, spreading on or spraying on a solution of PVDF over the PMMA surface. All of these methods are well known to experts in this field. The coating can also be applied by using an adhesive, by ultrasonic welding, hot air or a hot plate. Preferably the coating is applied on the window by heating the assembly of window and foil to a temperature of 160-190 $^{\circ}$C under such a pressure that the window does not shrink back at the temperature as used. In this connection it is recommended to heat the assembly within a short time such that only the surface to be coated is brought to the temperature of 160-190 $^{\circ}$C, preferably to a temperature of about 170 $^{\circ}$C.

The invention will be illustrated with the following example.

Example

An aircraft cabin window of an aircraft of the type Boeing 747 was cleaned with ethanol and covered on the convex side with a foil consisting of PVDF of 25 µm thickness, by heating carried out as follows. On the convex side of the thus covered window a sheet of highly polished stainless steel of 0.1 mm thickness was placed. The sheet was heated with a thin heating element, producing a uniform heat of 3.3 W/cm$^2$ over its entire surface. The temperature was measured by means of a thermocouple positioned between the sheet and the heating element. The stack of window coated with PVDF-foil, stainless steel sheet, heating element and thermocouple was placed between two moulds with the same curvature as the window and pressed together with a pressure of 2000 kPa. The stainless steel plate was then heated to a temperature of 170 $^{\circ}$C in 45 sec. At the moment this temperature was reached, the heating power was switched off and the unit allowed to cool down while the pressure was retained. The window was removed after the temperature was decreased

to 70 $^{\circ}$C in approximately 3 minutes. After this, the stainless steel sheet, heating element and thermocouple were positioned on the concave side of the window and the sheet is again heated as described above. The cabin window resulting after this treatment is on one side coated with a well adhering transparant layer of PVDF and the original curvature of the window is well preserved. The window was loaded such that in the coated surface of the window a tensile stress of 20 MPa existed. On top of the coating an amount of $H_2SO_4$ was put with a concentration of 40%. After a period of 2 weeks no trace of crazing could be seen, while on the surface of an uncoated window crazes appeared within a period of one hour if this was subjected to the same test.

-1-

CLAIMS

1.          Aircraft cabin window consisting mainly of polymethylmethacrylate (PMMA) and provided with a coating, characterized
in that at least one surface of the window is covered with an optically
transparant layer of coating consisting mainly of polyvinylidene fluoride
(PVDF).

2.          Aircraft cabin window as in claim 1, characterized
in that the or each surface layer has a thickness between 2 and 100 μm.

3.          Aircraft cabin window as in claims 1-2, characterized in that the or each surface layer consists mainly of a blend of
PVDF and PMMA in a weight ratio of 100:0 to 10:90.

4.          Aircraft cabin window as in claims 1-3, characterized in that between the coating and the window there is a layer consisting of a blend of PMMA and PVDF of which the concentration of PVDF
is lower than that of the outer surface layer containing PVDF.

5.          Aircraft cabin window as in claims 1-3, characterized in that the surface layer consists mainly of a blend of PMMA and
PVDF of which the concentration of PVDF increases towards the surface
from the PMMA-window.

6.                Aircraft cabin window as in claims 1-5, characterized in that the foil is applied by heating the assembly of window and
foil at a temperature of 160-190 $^{O}$C maintaining such a pressure that
the window does not shrink back at that temperature.

7.                Aircarft cabin window according to claim 6, characterized in that the heating of the assembly is carried out such that
only the surface to be coated is heated to 160-190 $^{O}$C.

8.                . Aircraft with cabin windows, characterized in that
the windows are as described in claims 1-7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | NTIS TECH. NOTES, ABSTRACT OF NEW TECHNOLOGY, no. PB81-970420, 1981, US Department of Commerce, Springfield, VA, US; PF 79L16: "Abrasion damage to stretched acrylic windshield and canopy transparencies" | 1 | B 64 C 1/14<br>B 32 B 17/10<br>B 32 B 27/30 |
| | --- | | |
| D,Y | US-A-4 226 904 (J.P. OLLIVIER et al.)<br>* Column 1, lines 35-47, 59-64; figures 2,3; claim 1 * | 1 | |
| A | * Claim 2 * | 2 | |
| | --- | | |
| A | US-A-3 458 391 (C.H. MILLER)<br>* Column 4, lines 25-27; claim 1 * | 1,3 | **TECHNICAL FIELDS SEARCHED (Int. Cl.4)** |
| | --- | | |
| A | EP-A-0 060 421 (KUREHA KAGAKU KOGYO K.K.)<br>* Page 1, lines 6-23; page 23, lines 9-22; claim 1 * | 1,4 | B 32 B<br>B 64 C |
| | ----- | | |

The present search report has been drawn up for all claims

| Place of search | Date of completion of the search | Examiner |
|---|---|---|
| THE HAGUE | 04-07-1986 | VAN THIELEN J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82